# EUROPÄISCHE PATENTANMELDUNG

(11) **EP 3 275 600 A1**
(43) Veröffentlichungstag der Anmeldung: **31.01.2018**
(21) Anmeldenummer: 17177012.6
(22) Anmeldetag: 20.06.2017
(51) Int. Cl.: B25G 1/04, B23D 29/02

(54) **BOLZENSCHNEIDER**

(30) Priorität: 06.07.2016 DE 202016103607 U
(71) Anmelder: STAHLWILLE Eduard Wille GmbH & Co. KG, 42349 Wuppertal (DE)
(72) Erfinder: HEIDEL, Dieter, 58332 Schwelm (DE)
(74) Vertreter: RGTH

(57) **Zusammenfassung**

Um einen Bolzenschneider (100), mit einem Schneidkopf (10), einem an dem Schneidkopf (10) gelagerten ersten Griffelement (11), und einem an dem Schneidkopf (10) gelagerten zweiten Griffelement (12), wobei das erste Griffelement (11) und das zweite Griffelement (12) jeweils ein Innenrohr (14) und ein auf dem Innenrohr (14) verschiebbar gelagertes Außenrohr (15) aufweisen, wobei das Innenrohr (14) und das Außenrohr (15) mittels einer Verrasteinrichtung (18) in einer ersten Halteposition und in mindestens einer zweiten Halteposition zueinander festlegbar sind, wird vorgeschlagen, einen Bolzenschneider zur Verfügung zu stellen, welcher sich durch eine verbesserte Handhabung für einen Benutzer auszeichnet, wird vorgeschlagen, dass die Verrasteinrichtung (18) einen schwenkbar gelagerten Verriegelungshebel (19) aufweist, wobei an dem Verriegelungshebel (19) ein Eingriffselement (24) angeordnet ist, welches in den Haltepositionen in an dem Außenrohr (15) und dem Innenrohr (14) ausgebildete Bohrungen (25, 26) eingreift, wobei das Eingriffselement (24) mittels einer an dem Verriegelungshebel (19) angeordneten Druckfeder (29) in den Bohrungen (25, 26) fixierbar ist.

## Beschreibung

Die vorliegende Erfindung betrifft einen Bolzenschneider mit einem Schneidkopf, einem an dem Schneidkopf gelagerten ersten Griffelement und einem an dem Schneidkopf gelagerten zweiten Griffelement, wobei das erste Griffelement und das zweite Griffelement jeweils ein Innenrohr und ein auf dem Innenrohr verschiebbar gelagertes Außenrohr aufweisen, wobei das Innenrohr und das Außenrohr mittels einer Verrasteinrichtung in einer ersten Halteposition und in mindestens einer zweiten Halteposition zueinander festlegbar sind.

### Stand der Technik

Ein Bolzenschneider ist beispielsweise aus der DE 10 2012 215 810 A1 bekannt. Dieser weist einen Schneidkopf und ein daran angeordnetes verlängerbares Geräteelement auf. Das verlängerbare Geräteelement kann durch ein Teleskoprohr oder ein einsetzbares Zwischenteil realisiert sein, so dass die Länge des Geräteelements variabel einstellbar ist. Ist das verlängerbare Geräteelement ein Teleskoprohr, so besteht dieses aus mehreren parallel in sich geführten Zylindern, welche bis zu einem Anschlag auf eine maximale Auszuglänge herausgezogen und wieder ineinander zurückgeschoben werden können. Ein Benutzer kann mit Hilfe eines Betätigungselements eine Raststellung, in der sich der Teleskoparm befindet, aufheben. Dadurch können die parallel in sich geführten Zylinder auf eine gewünschte Länge verlängert werden. Durch die Realisierung der Rastung mit geeigneten Raststellen im verlängerbaren Geräteelement zwischen Anfangs- und Endstellung des Teleskoprohres kann die Reichweite des Teleskoprohres stufenweise verstellt werden. Die Bedienung des Betätigungselementes ist für einen Benutzer hierbei jedoch erschwert. Zudem ist es für einen Benutzer schwer erkennbar, ob eine sichere Verrastung zwischen den Zylindern in der jeweiligen Raststellung erfolgt.

### Darstellung der Erfindung: Aufgabe, Lösung, Vorteile

Es ist daher die Aufgabe der vorliegenden Erfindung, einen Bolzenschneider zur Verfügung zu stellen, welcher sich durch eine verbesserte Handhabung für einen Benutzer auszeichnet.

Diese Aufgabe wird mit den Merkmalen des unabhängigen Anspruchs gelöst. Vorteilhafte Weiterbildungen der Erfindung sind in den abhängigen Ansprüchen angegeben.

Der Bolzenschneider gemäß der Erfindung zeichnet sich dadurch aus, dass die Verrasteinrichtung einen schwenkbar gelagerten Verriegelungshebel aufweist, wobei an dem Verriegelungshebel ein Eingriffselement angeordnet ist, welches in den Haltepositionen in an dem Außenrohr und dem Innenrohr ausgebildete Bohrungen eingreift, wobei das Eingriffselement mittels einer an dem Verriegelungshebel angeordneten Druckfeder in den Bohrungen fixierbar ist.

Um den Bolzenschneider in seiner Länge zu variieren, beispielsweise bei einem Transport des Bolzenschneiders, weisen die länglich ausgebildeten Griffelemente jeweils ein Innenrohr und ein Außenrohr auf, wobei das Außenrohr verschiebbar auf dem Innenrohr gelagert ist, so dass die Griffelemente teleskopartig verlängerbar und verkürzbar sind. In mindestens zwei Haltepositionen können das Innenrohr und Außenrohr der beiden Griffelemente zueinander festgelegt werden, so dass in dieser festgelegten Position eine Relativbewegung zwischen dem Innenrohr und dem Außenrohr nicht mehr möglich ist. Vorzugsweise können das Innenrohr und das Außenrohr in mehr als zwei Haltepositionen zueinander festgelegt werden, so dass die Griffelemente und damit der gesamte Bolzenschneider auf unterschiedlich große Längen einstellbar ist. Zum Festlegen des Außenrohres und des Innenrohres in den jeweiligen Haltepositionen ist an jedem Griffelement jeweils eine Verrasteinrichtung ausgebildet. Diese Verrasteinrichtungen weisen jeweils einen schwenkbar gelagerten Verriegelungshebel auf, über welchen die Verrasteinrichtungen von einem Benutzer betätigbar sind. Der Verriegelungshebel ist vorzugsweise ähnlich einer Wippe schwenkbar gelagert, so dass der Verriegelungshebel in eine Offenstellung und in eine Raststellung schwenkbar ist. Sowohl an dem Innenrohr als auch an dem Außenrohr sind jeweils mindestens zwei Bohrungen ausgebildet. Zum Festlegen des Außenrohres mit dem Innenrohr wird eine Bohrung des Innenrohres mit einer Bohrung des Außenrohres in Überlappung gebracht, so dass ein an dem Verriegelungshebel angeordnetes Eingriffselement in die beiden in Überlappung gebrachten Bohrungen eingreifen kann und damit das Innenrohr und das Außenrohr in einer der Haltepositionen festgelegt werden kann. Das Eingriffselement ist vorzugsweise derart an dem Verriegelungshebel angeordnet, dass es von einer Unterseite des Verriegelungshebels hervorsteht. Durch die Verschwenkbewegung des Verriegelungshebels kann das Eingriffselement in die sich überlappenden Bohrungen eingeführt werden und auch wieder aus diesen entfernt werden, so dass das Innenrohr und das Außenrohr wieder zueinander verschiebbar sind. In der Raststellung des Verriegelungshebels greift das Eingriffselement in zwei sich überlappende Bohrungen ein, und in der Offenstellung ist das Eingriffselement zumindest aus den an dem Innenrohr ausgebildeten Bohrungen entfernt bzw. herausgeschwenkt. Um gewährleisten zu können, dass sich das Eingriffselement in den Haltepositionen nicht ungewollt aus den Bohrungen lösen kann, ist an dem Verriegelungshebel eine Druckfeder angeordnet, wobei das Eingriffselement mittels der Druckfeder in den Bohrungen fixiert werden kann. Die Druckfeder ist vorzugsweise beabstandet zu dem Eingriffselement an dem Verriegelungshebel angeordnet. Im entspannten Zustand der Druckfeder kann eine Kraft ausgehend von der Druckfeder derart auf den Verriegelungshebel wirken, dass das Eingriffselement in die Bohrungen gedrückt wird. Zum Lösen des Eingriffselements aus den Bohrungen kann die Druckfeder von einem Benutzer über den Verriegelungshebel zusammengedrückt bzw. gestaucht werden, so dass der Verriegelungshebel eine Verschwenkbewegung von der Raststellung in die Offenstellung entgegen der Druckkraft der Druckfeder ausführt. Beim Überführen von der Offenstellung in die Raststellung kann der Verriegelungshebel ohne eine zusätzlich aufzubringende Kraft durch den Benutzer alleine durch die Federkraft der Druckfeder zurück geschwenkt werden, so dass das Eingriffselement wieder in sich überlappende Bohrungen des Außenrohres und des Innenrohres eingreifen kann. Die Handhabung zum Einstellen der Griffelemente und damit des gesamten Bolzenschneiders auf unterschiedlich große Längen kann dadurch für einen Benutzer wesentlich vereinfacht werden. Zudem kann eine sehr sichere Festlegung des Innenrohres und des Außenrohres eines Griffelementes in den verschiedenen Haltepositionen gewährleistet werden, so dass die Haltepositionen und damit die Festlegung des Innenrohres mit dem Außenrohr nicht ungewollt lösbar sind.

Das Eingriffselement kann beispielsweise ein Bolzen oder ein Stift sein, welcher an dem Verriegelungshebel befestigt ist. Der Bolzen bzw. Stift erstreckt sich dabei mit seiner Längsachse vorzugsweise in einem rechten Winkel zu der Längsachse des Verriegelungshebels.

Die Verrasteinrichtung kann weiter einen Aufnahmekörper aufweisen, in welchem der Verriegelungshebel schwenkbar gelagert ist, wobei der Aufnahmekörper bevorzugt an dem Außenrohr angeordnet ist. Durch den Aufnahmekörper kann eine sichere, insbesondere verkippsichere, Lagerung des Verriegelungshebels erreicht werden. Der Aufnahmekörper ist vorzugsweise derart ausgebildet, dass der Aufnahmekörper den Verriegelungshebel an seiner Umfangsfläche im Bereich der Querseitenflächen des Verriegelungshebels umschließt. Vorzugsweise liegt lediglich eine Oberseite des Verriegelungshebels frei, so dass über diese der Verriegelungshebel von einem Benutzer betätigbar ist. Im Bereich des Verriegelungshebels weist der Aufnahmekörper somit vorzugsweise eine Ausnehmung auf, so dass der Aufnahmekörper vorzugsweise wannenförmig ausgebildet und der Verriegelungshebel in diese Wannenform des Aufnahmekörpers eingelegt sein kann. Über beispielsweise einen Lagerstift kann der Verriegelungshebel schwenkbar in dem Aufnahmekörper angeordnet sein. Der Aufnahmekörper selber ist vorzugsweise an dem Außenrohr eines Griffelements angeordnet, so dass der Aufnahmekörper an einer Außenfläche bzw. einer Außenumfangsfläche des Außenrohrs fest und damit verrutschsicher fixiert sein kann.

Um eine besonders sichere Fixierung des Aufnahmekörpers an dem Außenrohr erreichen zu können, weist der Aufnahmekörper vorzugsweise eine das Außenrohr umschließende Querschnittsfläche auf. Der Aufnahmekörper ist damit vorzugsweise derart ausgebildet, dass der Aufnahmekörper das Außenrohr umgreift. Der Aufnahmekörper kann dafür hülsenförmig ausgebildet sein, so dass der Aufnahmekörper auf die Außenfläche bzw. Außenumfangsfläche des Außenrohres aufschiebbar ist.

Um die Montage der Verrasteinrichtung zu erleichtern, kann der Aufnahmekörper der Verrasteinrichtung mittels mindestens eines Befestigungsmittels lösbar an dem Außenrohr fixierbar sein. Die Verrasteinrichtung kann dadurch schnell und einfach an dem Außenrohr befestigt und von diesem auch wieder gelöst werden. Vorzugsweise sind dafür mehr als ein Befestigungsmittel vorgesehen, welche beabstandet zueinander an dem Aufnahmekörper angeordnet werden können.

Das mindestens eine Befestigungsmittel kann beispielsweise eine Schraube sein, welche von einem Benutzer leicht betätigbar ist, um ein schnelles Befestigen und Lösen des Aufnahmekörpers an bzw. von dem Außenrohr ausführen zu können. Die Schraube kann beispielsweise eine Madenschraube sein, welche in Form einer kopflosen Schraube mit Schlitz oder Innensechskant ausgebildet ist, wobei sich das Außengewinde im Gegensatz zu einer Schaftschraube über die gesamte Länge der Schraube erstreckt.

Um zu verhindern, dass das Außenrohr ungewollt von dem Innenrohr abgezogen und damit gelöst werden kann, kann der Bolzenschneider an seinen beiden Griffelementen jeweils einen Ausziehschutz aufweisen.

Der Ausziehschutz ist bevorzugt an dem Innenrohr eines Griffelementes derart angeordnet, dass der Ausziehschutz eine radial wirkende Kraft auf eine Innenfläche des Außenrohres aufbringen kann. Der Ausziehschutz kann damit von radial innen auf das Außenrohr drücken, so dass für eine Verschiebebewegung des Außenrohres relativ zu dem Innenrohr von dem Benutzer zunächst eine Kraft aufgebracht werden muss, welche größer ist als die von dem Ausziehschutz auf die Innenfläche des Außenrohres wirkende radiale Kraft.

Um die Wirkung des Ausziehschutzes weiter zu verbessern, kann es vorgesehen sein, dass der Ausziehschutz mit dem mindestens einen Befestigungsmittel zusammenwirkt. Der Ausziehschutz kann dafür zusammen mit dem Befestigungsmittel einen Anschlag ausbilden, so dass bei einer Berührung bzw. bei einem Inkontakttreten des Ausziehschutzes mit dem Befestigungsmittel eine Bewegung des Außenrohres relativ zu dem Innenrohr in eine Richtung, und zwar in die Abzugsrichtung des Außenrohres von dem Innenrohr, verhindert werden kann.

Um einen Anschlag zwischen dem Ausziehschutz und dem Befestigungsmittel auszubilden, kann es vorgesehen sein, dass an einer Außenfläche des Innenrohres eine Längsnut ausgebildet ist, im Bereich welcher der Ausziehschutz mit dem mindestens einem Befestigungsmittel zusammenwirkt. In dieser Längsnut kann eine Überlappung des Ausziehschutzes mit dem Befestigungsmittel ausgebildet werden, indem das Befestigungsmittel in die Längsnut hineinragt und auch der Ausziehschutz in die Längsnut hineinragt.

Der Ausziehschutz kann bevorzugt derart ausgebildet sein, dass dieser einen Auszugsstopfen und einen durch den Auszugsstopfen geführten und an dem Innenrohr gehaltenen Stiftkörper aufweist. Bei einer derartigen Ausgestaltung kann der Auszugsstopfen, welcher in das Innenrohr eingeschoben ist und vorzugsweise einen ringförmigen, nach außen abstehenden Kragen aufweist, mit seinem Kragen eine radiale wirkende Kraft auf die Innenfläche des Außenrohres aufbringen. Mittels des Stiftkörpers kann zum einen eine sichere Befestigung des Auszugsstopfens an dem Innenrohr realisiert werden, und zum anderen kann der Stiftkörper der Teil des Ausziehschutzes sein, welcher mit dem mindestens einen Befestigungsmittel zusammenwirkt.

### Kurze Beschreibung der Zeichnungen

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1: eine schematische Darstellung eines Bolzenschneiders gemäß der Erfindung,
- Fig. 2: eine schematische Schnittdarstellung entlang der Linie A - A des in Fig. 1 gezeigten Bolzenschneiders mit einer Festlegung des Innenrohres mit dem Außenrohr in einer ersten Halteposition,
- Fig. 3: eine schematische Schnittdarstellung entlang der Linie A - A des in Fig. 1 gezeigten Bolzenschneiders mit einer Festlegung des Innenrohres mit dem Außenrohr in einer zweiten Halteposition, und
- Fig. 4: eine schematische Detaildarstellung des in Fig. 3 gezeigten Schnittes im Bereich der Verrasteinrichtung des Bolzenschneiders.

### Bevorzugte Ausführungsformen der Erfindung

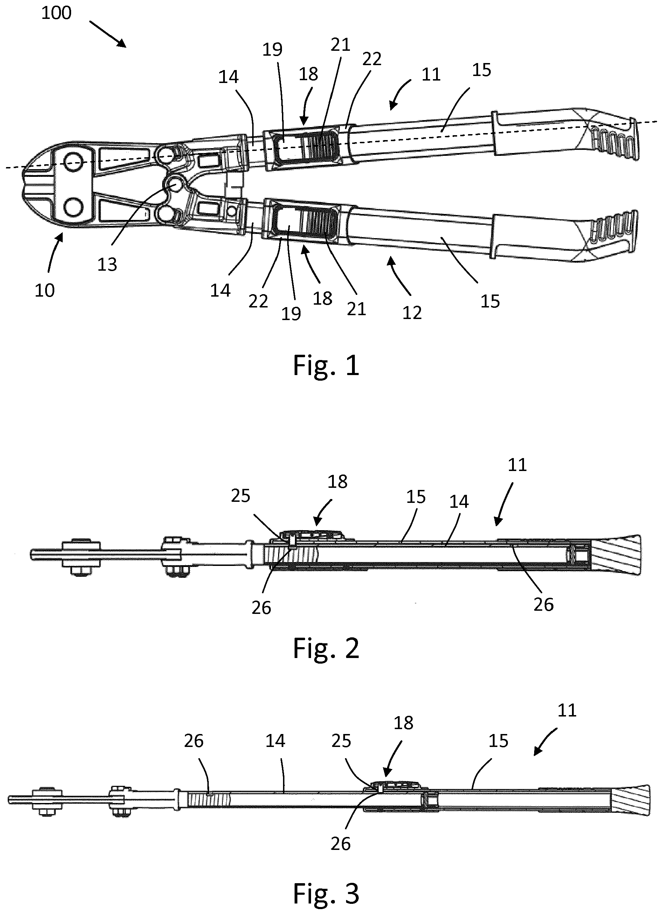

In Fig. 1 ist ein Bolzenschneider 100 gemäß der Erfindung schematisch gezeigt. Der Bolzenschneider 100 weist einen Schneidkopf 10 auf, wobei an dem Schneidkopf 10 ein erstes Griffelement 11 und ein zweites Griffelement 12 gelagert sind. Durch eine Bewegung der Griffelemente 11, 12 relativ zueinander kann der Schneidkopf 10 geöffnet und geschlossen werden.

Die Griffelemente 11, 12, welche über ein Drehgelenk 13 miteinander verbunden sind, sind teleskopartig ausgebildet und können dadurch in ihrer Länge variabel eingestellt werden. Hierfür weisen sowohl das erste Griffelement 11 als auch das zweite Griffelement 12 jeweils ein Innenrohr 14 und ein Außenrohr 15 auf. Das Innenrohr 14 und das Außenrohr 15 sind dabei so zueinander angeordnet, dass das Außenrohr 15 mit seiner Innenfläche 16 verschiebbar auf der Außenfläche 17 des Innenrohres 14 gelagert ist.

Um die Griffelemente 11, 12 nach Einstellen einer bestimmten Länge in dieser Länge fixieren zu können, ist an jedem Griffelement 11, 12 eine Verrasteinrichtung 18 ausgebildet, wobei die an dem ersten Griffelement 11 ausgebildete Verrasteinrichtung 18 vorzugsweise identisch zu der an dem zweiten Griffelement 12 ausgebildeten Verrasteinrichtung 18 ausgebildet ist. Mittels der Verrasteinrichtung 18 können das Innenrohr 14 und das Außenrohr 15 in mindestens zwei verschiedenen Haltepositionen zueinander festgelegt werden, so dass das Innenrohr 14 und das Außenrohr 15 in den jeweiligen Haltepositionen miteinander lösbar fixiert sind.

In Fig. 2 ist eine Fixierung des Innenrohres 14 und des Außenrohres 15 in einer ersten Halteposition gezeigt, bei welcher das Innenrohr 14 und das Außenrohr 15 derart weit zusammengeschoben sind, dass die Griffelemente 11 eine minimale Länge aufweisen.

In Fig. 3 ist eine Fixierung des Innenrohres 14 und des Außenrohres 15 in einer zweiten Halteposition gezeigt, bei welcher das Innenrohr 14 und das Außenrohr 15 derart weit auseinandergeschoben sind, dass die Griffelemente 11 eine maximale Länge aufweisen.

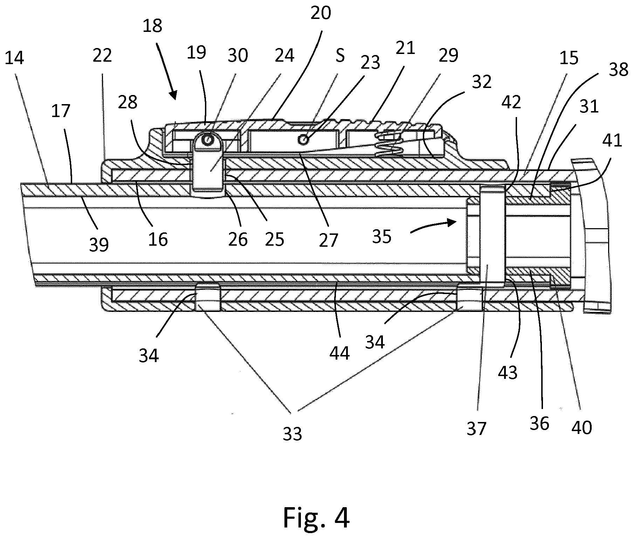

In Fig. 4 ist eine Verrasteinrichtung 18 in einer Schnittdarstellung vergrößert dargestellt.

Die Verrasteinrichtung 18 weist einen Verriegelungshebel 19 auf, über welchen ein Benutzer die Verrasteinrichtung 18 betätigen kann. An einer Oberseite 20 des Verriegelungshebels 18 ist eine geriffelt ausgebildete Grifffläche 21 ausgebildet, im Bereich welcher eine Betätigung des Verriegelungshebels 19 durch einen Benutzer erfolgen kann.

Der Verriegelungshebel 19 ist in einem Aufnahmekörper 22 der Verrasteinrichtung 18 schwenkbar gelagert, so dass der Verriegelungshebel 19 durch ein Betätigen des Verriegelungshebels 19 im Bereich der Grifffläche 21 von einem Benutzer in eine Offenstellung und eine Raststellung verschwenkt werden kann. Fig. 4 zeigt den Verriegelungshebel 19 in einer Raststellung, in welcher das Innenrohr 14 und das Außenrohr zueinander festgelegt sind. Der Verriegelungshebel 19 ist mittels eines Lagerstifts 23 schwenkbar an dem Aufnahmekörper 22 gelagert, wobei die Lagerung mittels des Lagerstifts 23 und damit die Schwenkachse S des Verriegelungshebels 19 in etwa mittig von der Gesamtlänge des Verriegelungshebels 19 vorgesehen ist.

Um die Festlegung des Innenrohres 14 und des Außenrohres 15 in einer Halteposition erreichen zu können, ist an dem Verriegelungshebel 19 ein Eingriffselement 24 angeordnet, welches in den Haltepositionen in an dem Außenrohr 15 und dem Innenrohr 14 ausgebildete Bohrungen 25, 26 eingreift. Für jede Halteposition ist an dem Innenrohr 14 jeweils eine Bohrung 26 ausgebildet. Bei der in den Fig. 1 - 4 gezeigten Ausgestaltung eines Bolzenschneiders 100 sind entlang der Länge des Griffelements 11, 12 an dem Innenrohr 14 zwei Bohrungen 26 beabstandet zueinander ausgebildet, wie insbesondere in Fig. 2 und 3 zu erkennen ist. An dem Außenrohr 15 ist hingegen lediglich eine Bohrung 25 ausgebildet, welche durch eine Verschiebebewegung des Außenrohres 15 relativ zu dem Innenrohr 14 in Überlappung mit den einzelnen Bohrungen 26 des Innenrohres 14 gebracht werden kann.

Zum Festlegen des Innenrohres 14 mit dem Außenrohr 15 wird eine Bohrung 26 des Innenrohres 14 mit der Bohrung 25 des Außenrohres 15 in Überlappung gebracht, so dass das an dem Verriegelungshebel 19 angeordnete Eingriffselement 24 in die beiden in Überlappung gebrachten Bohrungen 25, 26 eingreifen kann und damit das Innenrohr 14 und das Außenrohr 15 in einer der Haltepositionen festgelegt werden kann. Das Eingriffselement 24 ist dabei derart an dem Verriegelungshebel 19 angeordnet, dass es von einer Unterseite 27 des Verriegelungshebels 19 hervorsteht und durch eine an dem Aufnahmekörper 22 ausgebildete Öffnung 28 hindurchragt.

Gehalten wird das Eingriffselement 24 in den Bohrungen 25, 26 über eine Druckfeder 29, welche an dem Verriegelungshebel 19 und dem Aufnahmekörper 22 angeordnet ist. Die Druckfeder 29 ist in Bezug auf die Schwenkachse S des Verriegelungshebels 19 spiegelsymmetrisch zu dem Eingriffselement 24 an dem Verriegelungshebel 19 angeordnet, so dass der Abstand zwischen der Schwenkachse S und dem Eingriffselement 24 und der Abstand zwischen der Schwenkachse S und der Druckfeder 29 gleich groß sind. Die Druckfeder 29 ist in Form einer Spiralfeder ausgebildet. Im entspannten Zustand der Druckfeder 29 wirkt eine Kraft ausgehend von der Druckfeder 29 derart auf den Verriegelungshebel 19, dass das Eingriffselement 24 in die Bohrungen 25, 26 gedrückt wird. Zum Lösen des Eingriffselements 24 aus den Bohrungen 25, 26 kann die Druckfeder 29 von einem Benutzer durch Aufbringen einer Kraft über die Grifffläche 21 auf den Verriegelungshebel 19 zusammengedrückt bzw. gestaucht werden, so dass der Verriegelungshebel 19 eine Verschwenkbewegung von der Raststellung in die Offenstellung entgegen der Druckkraft der Druckfeder 29 ausführt. Beim Überführen von der Offenstellung in die Raststellung kann der Verriegelungshebel 19 ohne eine zusätzlich aufzubringende Kraft durch den Benutzer alleine durch die Federkraft der Druckfeder 29 zurück geschwenkt werden, so dass das Eingriffselement 24 wieder in zwei sich überlappende Bohrungen 25, 26 eingreifen kann.

Das Eingriffselement 24 ist bei der hier gezeigten Ausgestaltung in Form eines Bolzens ausgebildet. Angeordnet ist das Eingriffselement 24 an dem Verriegelungshebel 19 derart, dass die Längsachse des Eingriffselements 24 in einem Winkel von 90° zu der Längsachse des Verriegelungshebels 19 angeordnet ist. Über einen Lagerstift 30 ist das Eingriffselement 24 an dem Verriegelungshebel 19 gelagert.

Der Aufnahmekörper 22 ist hülsenförmig ausgebildet und auf eine Außenfläche 31 des Außenrohres 15 aufgeschoben, so dass der Aufnahmekörper 22 das Außenrohr 15 umschließt bzw. umgreift. Dort, wo der Verriegelungshebel 19 an dem Aufnahmekörper 22 angeordnet ist, weist der Aufnahmekörper 22 eine Ausnehmung 32 auf, in welche der Verriegelungshebel 19 eingesetzt ist. Im Bereich dieser Ausnehmung 32 ist der Aufnahmekörper 22 wannenförmig ausgebildet. Durch die Ausnehmung 32 des Aufnahmekörpers 22 und den darin eingesetzten Verriegelungshebel 19 umschließt der Aufnahmekörper 22 den Verriegelungshebel 19 an seiner Umfangsfläche im Bereich der Querseitenflächen des Verriegelungshebels 19 und der Unterseite 27 des Verriegelungshebels 19. Lediglich eine Oberseite 20 des Verriegelungshebels 19 liegt frei, so dass über diese der Verriegelungshebel 19 von einem Benutzer betätigt werden kann.

Der Aufnahmekörper 22 ist an dem Außenrohr 15 verrutschsicher befestigt, indem der Aufnahmekörper 22 bei der hier gezeigten Ausgestaltung mittels zwei Befestigungsmitteln 33 an dem Außenrohr 15 befestigt ist. Die Befestigungsmittel 33 sind in Form von Schrauben, insbesondere Madenschrauben, ausgebildet, welche in an dem Außenrohr 15 ausgebildete Gewindebohrungen 34 eingeschraubt werden.

Ferner weist der Bolzenschneider 100 einen Ausziehschutz 35 auf, um zu verhindern, dass das Außenrohr 15 von dem Innenrohr 14 ungewollt abgezogen werden kann. Der Ausziehschutz 35 weist einen Auszugsstopfen 36 und einen durch den Auszugsstopfen 36 geführten und an dem Innenrohr 14 gehaltenen Stiftkörper 37 auf.

Der Auszugsstopfen 36 weist einen Hülsenkörper 38 auf, mittels welchem der Auszugsstopfen 36 in einen Innenraum des Innenrohres 14 hineinragt und mittels welchem der Auszugsstopfen 36 gegen eine Innenfläche 39 des Innenrohres 14 radial gepresst ist. An dem Hülsenkörper 38 ist ein umlaufender Kragen 40 ausgebildet, welcher eine größere Außenumfangsfläche aufweist als der Hülsenkörper 38. Der Kragen 40 ragt damit nicht in den Innenraum des Innenrohres 14 hinein, sondern liegt an einer Stirnfläche 41 des Innenrohres 14 an. Ferner drückt der Kragen 40 radial gegen die Innenfläche 16 des Außenrohres 15.

Der Stiftkörper 37 ist durch den Auszugsstopfen 36 hindurchgeführt und in zwei an dem Innenrohr 14 ausgebildeten Öffnungen 42, 43, die sich gegenüberliegen, gehalten, so dass der Auszugsstopfen 36 mittels des Stiftkörpers 37 an dem Innenrohr 14 zusätzlich zu der eigenen Fixierung fixiert ist.

Der Stiftkörper 37 wirkt mit einem der Befestigungsmittel 33 zusammen, indem zwischen diesen beiden ein Anschlag ausgebildet wird. Bei einer Berührung bzw. bei einem Inkontakttreten des Stiftkörpers 37 mit dem Befestigungsmittel 33 kann, wie insbesondere auch in Fig. 4 gezeigt ist, eine Bewegung des Außenrohres 15 relativ zu dem Innenrohr 14 in eine Richtung und zwar in die Abzugsrichtung des Außenrohres 15 von dem Innenrohr 14 verhindert werden.

Um den Anschlag zwischen dem Stiftkörper 37 und dem Befestigungsmittel 33 auszubilden, ist an der Außenfläche 17 des Innenrohres 14 eine Längsnut 44 ausgebildet, im Bereich welcher der Ausziehschutz 35 mit dem Befestigungsmittel 33 zusammenwirkt. In dieser Längsnut 44 kann eine Überlappung des Stiftkörpers 37 mit dem Befestigungsmittel 33 ausgebildet werden, indem das Befestigungsmittel 33 in die Längsnut 44 hineinragt und auch der Stiftkörper 37 in die Längsnut 44 hineinragt, wie in Fig. 4 gezeigt ist.

Die Erfindung beschränkt sich in ihrer Ausführung nicht auf das vorstehend angegebene bevorzugte Ausführungsbeispiel. Vielmehr ist eine Anzahl von Varianten denkbar, welche von den dargestellten Lösungen auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

### Bezugszeichenliste

- 100: Bolzenschneider
- 10: Schneidkopf
- 11: Erstes Griffelement
- 12: Zweites Griffelement
- 13: Drehgelenk
- 14: Innenrohr
- 15: Außenrohr
- 16: Innenfläche des Außenrohres
- 17: Außenfläche des Innenrohres
- 18: Verrasteinrichtung
- 19: Verriegelungshebel
- 20: Oberseite
- 21: Grifffläche
- 22: Aufnahmekörper
- 23: Lagerstift
- 24: Eingriffselement
- 25: Bohrung Außenrohr
- 26: Bohrung Innenrohr
- 27: Unterseite
- 28: Öffnung
- 29: Druckfeder
- 30: Lagerstift
- 31: Außenfläche Außenrohr
- 32: Ausnehmung
- 33: Befestigungsmittel
- 34: Gewindebohrung
- 35: Ausziehschutz
- 36: Auszugsstopfen
- 37: Stiftkörper
- 38: Hülsenkörper
- 39: innenfläche Innenrohr
- 40: Kragen
- 41: Stirnfläche
- 42: Öffnung
- 43: Öffnung
- 44: Längsnut

- S: Schwenkachse

## Patentansprüche

1. Bolzenschneider (100), mit
einem Schneidkopf (10),
einem an dem Schneidkopf (10) gelagerten ersten Griffelement (11), und einem an dem Schneidkopf (10) gelagerten zweiten Griffelement (12),
wobei das erste Griffelement (11) und das zweite Griffelement (12) jeweils ein Innenrohr (14) und ein auf dem Innenrohr (14) verschiebbar gelagertes Außenrohr (15) aufweisen,
wobei das Innenrohr (14) und das Außenrohr (15) mittels einer Verrasteinrichtung (18) in einer ersten Halteposition und in mindestens einer zweiten Halteposition zueinander festlegbar sind,
**dadurch gekennzeichnet, dass** die Verrasteinrichtung (18) einen schwenkbar gelagerten Verriegelungshebel (19) aufweist, wobei an dem Verriegelungshebel (19) ein Eingriffselement (24) angeordnet ist, welches in den Haltepositionen in an dem Außenrohr (15) und dem Innenrohr (14) ausgebildete Bohrungen (25, 26) eingreift, wobei das Eingriffselement (24) mittels einer an dem Verriegelungshebel (19) angeordneten Druckfeder (29) in den Bohrungen (25, 26) fixierbar ist.

2. Bolzenschneider (100) nach Anspruch 1, **dadurch gekennzeichnet, dass** das Eingriffselement (24) ein Bolzen oder ein Stift ist.

3. Bolzenschneider (100) nach Anspruch 1 oder 2, **dadurch gekennzeichnet, dass** die Verrasteinrichtung (18) einen Aufnahmekörper (22) aufweist, in welchem der Verriegelungshebel (19) schwenkbar gelagert ist, wobei der Aufnahmekörper (22) an dem Außenrohr (15) angeordnet ist.

4. Bolzenschneider (100) nach Anspruch 3, **dadurch gekennzeichnet, dass** der Aufnahmekörper (22) eine das Außenrohr (15) umschließende Querschnittsfläche aufweist.

5. Bolzenschneider (100) nach Anspruch 3 oder 4, **dadurch gekennzeichnet, dass** der Aufnahmekörper (22) mittels mindestens eines Befestigungsmittels (33) lösbar an dem Außenrohr (15) fixierbar ist.

6. Bolzenschneider (100) nach Anspruch 4 oder 5, **dadurch gekennzeichnet, dass** das mindestens eine Befestigungsmittel (33) eine Schraube ist.

7. Bolzenschneider (100) nach einem der Ansprüche 1 bis 6, **dadurch gekennzeichnet, dass** ein Ausziehschutz (35) zum Verhindern eines Abziehens des Außenrohres (15) von dem Innenrohr (14) ausgebildet ist.

8. Bolzenschneider (100) nach Anspruch 7, **dadurch gekennzeichnet, dass** der Ausziehschutz (35) an dem Innenrohr (14) derart angeordnet ist, dass der Ausziehschutz (35) eine radial wirkende Kraft auf eine Innenfläche (16) des Außenrohres (15) aufbringt.

9. Bolzenschneider (100) nach Anspruch 7 oder 8, **dadurch gekennzeichnet, dass** der Ausziehschutz (35) mit dem mindestens einen Befestigungsmittel (33) zusammenwirkt.

10. Bolzenschneider (100) nach einem der Ansprüche 7 bis 9, **dadurch gekennzeichnet, dass** an einer Außenfläche (17) des Innenrohres (14) eine Längsnut (44) ausgebildet ist, im Bereich welcher der Ausziehschutz (35) mit dem mindestens einen Befestigungsmittel (33) zusammenwirkt.

11. Bolzenschneider (100) nach einem der Ansprüche 7 bis 10, **dadurch gekennzeichnet, dass** der Ausziehschutz (35) einen Auszugsstopfen (36) und einen durch den Auszugsstopfen (36) geführten und an dem Innenrohr (14) gehaltenen Stiftkörper (37) aufweist.
